(19)

Europäisches
Patentamt
European
Patent Office
Office européen
des brevets

(11) **EP 3 116 141 A1**

(12) **EUROPEAN PATENT APPLICATION**
published in accordance with Art. 153(4) EPC

(43) Date of publication:
**11.01.2017 Bulletin 2017/02**

(21) Application number: **14888902.5**

(22) Date of filing: **11.04.2014**

(51) Int Cl.:
**H04B 7/06** (2006.01)          **H04W 72/12** (2009.01)

(86) International application number:
**PCT/CN2014/075133**

(87) International publication number:
**WO 2015/154295 (15.10.2015 Gazette 2015/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Huawei Technologies Co. Ltd.
Shenzhen, Guangdong 518129 (CN)**

(72) Inventors:
• **SHI, Yinke
  Shenzhen
  Guangdong 518129 (CN)**
• **WANG, Libo
  Shenzhen
  Guangdong 518129 (CN)**

• **QIU, Ling
  Shenzhen
  Guangdong 518129 (CN)**
• **WANG, Zongjie
  Shenzhen
  Guangdong 518129 (CN)**
• **ZHANG, Peng
  Shenzhen
  Guangdong 518129 (CN)**

(74) Representative: **Pfenning, Meinig & Partner mbB
Patent- und Rechtsanwälte
Theresienhöhe 11a
80339 München (DE)**

(54) **DOWNLINK SCHEDULING METHOD AND DEVICE**

(57)    The present invention provides a downlink scheduling method and device, the method comprising: obtaining information about a serving node and information about a coordinating node of an edge user, performing coordinated scheduling on the edge user according to the information about the serving node and the information about the coordinating node, determining whether the serving node and the coordinating node can simultaneously schedule the edge user, and if yes, instructing the serving node and the coordinating node to allocate a same code channel resource to send data to the edge user, so that the edge user is served based on code channel multiplexing and in a coordinated transmission manner via beamforming, thereby improving a received signal-to-noise ratio of the edge user.

Obtain information about a serving node and information about a coordinating node of an edge user, where the serving node refers to a node whose strength of reference signal power, received by the edge user from all nodes in a softcell in which the edge user is located, is first strength, the coordinating node refers to a node whose strength of reference signal power, received by the edge user from all the nodes in the softcell in which the edge user is located, is second strength, and the edge user refers to a user with a difference between the first strength and the second strength of the reference signal power being within a preset threshold — 201

Perform coordinated scheduling on the edge user according to the information about the serving node and the information about the coordinating node — 202

Determine whether the serving node and the coordinating node can simultaneously schedule the edge user — 203

If yes, instruct the serving node and the coordinating node to allocate a same code channel resource to send data to the edge user — 204

FIG. 2

**Description**

**TECHNICAL FIELD**

The present invention relates to the communications field, and in particular, to a downlink scheduling method and device.

**BACKGROUND**

In a conventional cellular softcell, which is also referred to as a homogeneous network, a macrocell (Microcell) needs to cover a large area. Because of impact such as a path loss and small-scale fading of a radio channel, performance of a cell-edge user cannot be ensured, a user access distance is relatively long, and energy consumption of a user terminal is relatively large. To further improve performance of a cellular softcell system, a concept of a heterogeneous network is generated, and a main idea of the concept is to improve a system capacity by means of cell splitting and improve energy efficiency by reducing an access distance. The heterogeneous network is generated based on the homogeneous network, and a specific network deployment manner is that several low power nodes (Low Power Node, LPN) are deployed according to a rule within an area covered by a macrocell in the homogeneous network, and an area covered by these LPNs is referred to as a picocell (Picocell).

In the heterogeneous network, the Microcell and the Picocell generally use co-channel deployment (co-channel Deployment). Although this co-channel deployment structure can improve an overall cell capacity, the structure causes a lot of problems, for example, a frequent handover problem and an inter-cell interference problem that are caused by decrease of cell coverage.

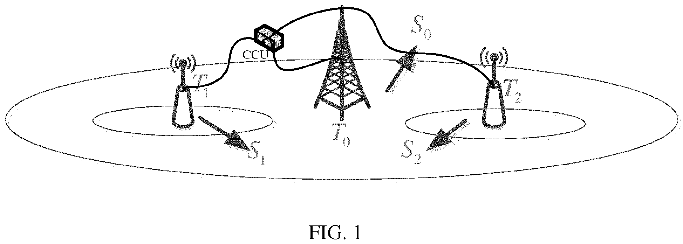

To resolve the foregoing problems, Ericsson puts forward a combined cell deployment (Combined Cell Deployment) scenario, and this deployment scenario is also referred to as a softcell (Softcell). The softcell is the same as the co-channel deployment scenario, that is, multiple LPNs are also deployed in the Microcell, and a difference is that the Picocell covered by the LPNs has a same cell ID as that of the Microcell. As shown in FIG. 1, FIG. 1 is a system architecture diagram of a softcell according to the prior art. It is assumed that, $N(= 2)$ low power nodes (Low Power Node, LPN) are deployed in a Microcell, a macrocell (Base Station) is referred to as a transmission node $T_0$, an coverage area is referred to as $S_0$, an LPN is referred to as a transmission node $T_i$ $(i = 1,..., N)$, and an area covered by $T_i$ is referred to as $S_i$. According to a definition of the softcell, $S_i$ has a same cell ID as that of $S_0$. It can be seen from description about the softcell that, because the Microcell and the Picocell that are in the softcell use a same cell ID, a user does not need to perform frequent handover in a movement process in the softcell, and only needs to select a suitable transmission node for access.

For a high speed downlink packet access (High Speed Downlink Packet Access, HSDPA) heterogeneous network, when the co-channel deployment scenario is used, decrease of cell coverage increases a user handover frequency, causing severe problems such as call drop of the user, and video interrupt. Although using the softcell deployment scenario described above may avoid handover in the softcell, because the transmission nodes in the softcell use a same scrambling code, a cell-edge user suffers from severe co-code-channel interference, severely reducing performance of the edge user.

To improve quality of a signal received by the user, the macrocell and the LPN may perform data transmission in single frequency network (Single Frequency Network, SFN) transmission mode. In the softcell, the LPN and the BS are connected to a CCU through a fiber link, and the CCU centrally controls data transmission between the LPN and the BS. That is, all the transmission nodes simultaneously serve a user in a same code channel resource, and the user is not only an edge user, but also refers to a non-edge user. Although the SFN transmission mode can effectively improve performance of the edge user, because the LPN and the BS need to simultaneously serve a user on a same code channel, waste of a code channel resource is relatively severe. It can be seen from above that an SFN transmission solution is a method for improving performance of an edge user at the cost of sacrificing an overall throughput, and this solution goes counter to an original intention of putting forward a heterogeneous network technology.

To improve a throughput of the softcell, the user in the coverage of the transmission nodes needs to perform code channel multiplexing, and then transmit data according to spatial reuse mode (Spatial Reuse Mode, SRM). In an SRM transmission mode solution, a central control unit (Central Control Unit, CCU) independently schedules a user served by a transmission node $T_0$ and a transmission node $T_1$, and in a scheduling process, interference that may be caused to the edge user by a scheduling result in the coverage of the transmission node $T_1$ is not considered. Therefore, the edge user suffers from huge interference from the transmission node $T_1$, and particularly in the softcell, because a same scrambling code is used between the transmission nodes, and this type of co-channel interference is particularly huge, a CQI of an edge user is reduced, and a communication rate is also reduced accordingly. Although the SRM solution may use a remaining resource of another transmission node to serve the edge user, for a hotspot distribution scenario, this type of solution not only fails to improve performance of the edge user, but also increases complexity of protocol implementation. Therefore, how to improve performance of an edge user while improving code channel resource utilization is a problem to be resolved.

**SUMMARY**

Embodiments of the present invention provide a downlink scheduling method and device, to resolve a problem about how to improve performance of an edge user when an average throughput rate comparable with that of an SRM solution is obtained.

According to a first aspect, a downlink scheduling method is provided, where the method includes:

obtaining, by a macrocell, information about a serving node and information about a coordinating node of an edge user, where the serving node refers to a node whose strength of reference signal power, received by the edge user from all nodes in a softcell in which the edge user is located, is first strength, the coordinating node refers to a node whose strength of reference signal power, received by the edge user from all the nodes in the softcell in which the edge user is located, is second strength, and the edge user refers to a user with a difference between the first strength and the second strength of the reference signal power being within a preset threshold;

performing, by the macrocell, coordinated scheduling on the edge user according to the information about the serving node and the information about the coordinating node; and

determining, by the macrocell, whether the serving node and the coordinating node can simultaneously schedule the edge user; and

if yes, instructing, by the macrocell, the serving node and the coordinating node to allocate a same code channel resource to send data to the edge user.

With reference to the first aspect, in a first possible implementation manner of the first aspect, the determining, by the macrocell, whether the serving node and the coordinating node can simultaneously schedule the edge user includes:

simultaneously receiving, by the edge user in a current subframe, coordinated scheduling of the serving node and the coordinating node, and calculating, according to a signal to interference plus noise ratio CQI_edge3 of the coordinated scheduling, a PF priority corresponding to the edge user served by the serving node and a proportional fairness PF priority corresponding to the edge user served by the coordinating node; and

comparing the PF priority corresponding to the edge user served by the serving node and the PF priority corresponding to the edge user served by the coordinating node with PF priorities corresponding to another user separately served by the serving node and the coordinating node, where

if the PF priority corresponding to the edge user served by the serving node is higher than a PF priority corresponding to the another user served by the serving node, the serving node can schedule the edge user; and

if the PF priority corresponding to the edge user served by the coordinating node is higher than a PF priority corresponding to the another user served by the coordinating node, the coordinating node can schedule the edge user.

With reference to the first aspect or the first possible implementation manner of the first aspect, in a second possible implementation manner of the first aspect, the method further includes:

if the serving node and the coordinating node cannot simultaneously schedule the edge user, determining whether the serving node can schedule the edge user, where

if yes, the serving node independently schedules the edge user; and

the determining whether the serving node can schedule the edge user includes:

in a case in which the edge user receives independent scheduling of the serving node, calculating, according to a signal to interference plus noise ratio CQI_edge1 of the independent scheduling of the serving node, a PF priority corresponding to the edge user served by the serving node; and

comparing the PF priority corresponding to the edge user served by the serving node with a PF priority corresponding to another user served by the serving node, where

if the PF priority corresponding to the edge user served by the serving node is higher than the PF priority corresponding to the another user served by the serving node, the serving node can independently schedule the edge user.

With reference to the second possible implementation manner of the first aspect, in a third possible implementation manner of the first aspect, the method further includes:

if the serving node and the coordinating node cannot simultaneously schedule the edge user, and the serving node cannot schedule the edge user, determining whether the coordinating node can schedule the edge user, where if yes, the coordinating node independently schedules the edge user; and
the determining whether the coordinating node can schedule the edge user includes:

in a case in which the edge user receives independent scheduling of the coordinating node, calculating, according to a signal to interference plus noise ratio CQI_edge2 of the independent scheduling of the coordinating node, a PF priority corresponding to the edge user served by the coordinating node; and
comparing the PF priority corresponding to the edge user served by the coordinating node with a PF priority corresponding to another user served by the coordinating node, where
if the PF priority corresponding to the edge user served by the coordinating node is higher than the PF priority corresponding to the another user served by the coordinating node, the coordinating node can independently schedule the edge user.

With reference to the third possible implementation manner of the first aspect, in a fourth possible implementation manner of the first aspect, the method further includes:

receiving, by the macrocell, CQI information fed back by the edge user by using a differential feedback method, where the differential feedback manner is: feeding back CQI_edge1, a difference between CQI_edge2 and CQI_edge1, and a difference between CQI_edge3 and CQI_edge1, or
presetting thresholds X and Y, if CQI_edge2 is higher than CQI_edge1 by X or more than X, feeding back X, and if CQI_edge3 is higher than CQI_edge1 by Y or more than Y, feeding back Y.

With reference to the first aspect, the first possible implementation manner of the first aspect, the second possible implementation manner of the first aspect, the third possible implementation manner of the first aspect or the fourth possible implementation manner of the first aspect, in a fifth possible implementation manner of the first aspect, the method further includes:

if the serving node and the coordinating node cannot simultaneously schedule the edge user, the serving node cannot independently schedule the edge user, and the coordinating node cannot independently schedule the edge user, skipping, by the macrocell, scheduling the edge user.

With reference to the first aspect, the first possible implementation manner of the first aspect, the second possible implementation manner of the first aspect, the third possible implementation manner of the first aspect, the fourth possible implementation manner of the first aspect, or the fifth possible implementation manner of the first aspect, in a sixth possible implementation manner of the first aspect, the method further includes:

scheduling a center user according to spatial reuse mode SRM, where the center user refers to a user with a difference between the first strength and the second strength of the reference signal power being greater than the preset threshold.

According to a second aspect, a downlink scheduling device is provided, where the device includes:

an obtaining unit, configured to obtain information about a serving node and information about a coordinating node of an edge user, where the serving node refers to a node whose strength of reference signal power, received by the edge user from all nodes in a softcell in which the edge user is located, is first strength, the coordinating node refers to a node whose strength of reference signal power, received by the edge user from all the nodes in the softcell in which the edge user is located, is second strength, and the edge user refers to a user with a difference between the first strength and the second strength of the reference signal power being within a preset threshold;
a coordinated scheduling unit, configured to perform coordinated scheduling on the edge user according to the information about the serving node and the information about the coordinating node;
a determining unit, configured to determine whether the serving node and the coordinating node can simultaneously schedule the edge user; and
a notification unit, configured to: if yes, instruct the serving node and the coordinating node to allocate a same code channel resource to send data to the edge user.

With reference to the second aspect, in a first possible implementation manner of the second aspect, the determining unit is specifically configured to:

simultaneously receive, by the edge user in a current subframe, coordinated scheduling of the serving node and the coordinating node, and calculate, according to a signal to interference plus noise ratio CQI_edge3 of the coordinated scheduling, a proportional fairness PF priority corresponding to the edge user served by the serving node and a PF priority corresponding to the edge user served by the coordinating node; and

compare the PF priority corresponding to the edge user served by the serving node and the PF priority corresponding to the edge user served by the coordinating node with PF priorities corresponding to another user separately served by the serving node and the coordinating node, where

if the PF priority corresponding to the edge user served by the serving node is higher than a PF priority corresponding to the another user served by the serving node, the serving node can schedule the edge user; and

if the PF priority corresponding to the edge user served by the coordinating node is higher than a PF priority corresponding to the another user served by the coordinating node, the coordinating node can schedule the edge user.

With reference to the second aspect or the first possible implementation manner of the second aspect, in a second possible implementation manner of the second aspect, the determining unit is further configured to:

if the serving node and the coordinating node cannot simultaneously schedule the edge user, determine whether the serving node can schedule the edge user, where
if yes, the serving node independently schedules the edge user; and
the determining whether the serving node can schedule the edge user includes:

in a case in which the edge user receives independent scheduling of the serving node, calculating, according to a signal to interference plus noise ratio CQI_edge1 of the independent scheduling of the serving node, a PF priority corresponding to the edge user served by the serving node; and

comparing the PF priority corresponding to the edge user served by the serving node with a PF priority corresponding to another user served by the serving node, where

if the PF priority corresponding to the edge user served by the serving node is higher than the PF priority corresponding to the another user served by the serving node, the serving node can independently schedule the edge user.

With reference to the second possible implementation manner of the second aspect, in a third possible implementation manner of the second aspect, the determining unit is further configured to:

if the serving node and the coordinating node cannot simultaneously schedule the edge user, and the serving node cannot schedule the edge user, determine whether the coordinating node can schedule the edge user, where
if yes, the coordinating node independently schedules the edge user; and
the determining whether the coordinating node can schedule the edge user includes:

in a case in which the edge user receives independent scheduling of the coordinating node, calculating, according to a signal to interference plus noise ratio CQI_edge2 of the independent scheduling of the coordinating node, a PF priority corresponding to the edge user served by the coordinating node; and

comparing the PF priority corresponding to the edge user served by the coordinating node with a PF priority corresponding to another user served by the coordinating node, where

if the PF priority corresponding to the edge user served by the coordinating node is higher than the PF priority corresponding to the another user served by the coordinating node, the coordinating node can independently schedule the edge user.

With reference to the third possible implementation manner of the second aspect, in a fourth possible implementation manner of the second aspect, the device further includes a receiving unit, and the receiving unit is specifically configured to:

receive CQI information fed back by the edge user by using a differential feedback method, where
the differential feedback manner is: feeding back CQI_edge1, a difference between CQI_edge2 and CQI_edge1, and a difference between CQI_edge3 and CQI_edge1, or
presetting thresholds X and Y, if CQI_edge2 is higher than CQI_edge1 by X or more than X, feeding back X, and if CQI_edge3 is higher than CQI_edge1 by Y or more than Y, feeding back Y.

With reference to the second aspect, the first possible implementation manner of the second aspect, the second possible implementation manner of the second aspect, the third possible implementation manner of the second aspect or the fourth possible implementation manner of the second aspect, in a fifth possible implementation manner of the second aspect, the device further includes a processing unit, and the processing unit is specifically configured to:

if the serving node and the coordinating node cannot simultaneously schedule the edge user, the serving node cannot independently schedule the edge user, and the coordinating node cannot independently schedule the edge user, skip scheduling the edge user.

With reference to the second aspect, the first possible implementation manner of the second aspect, the second possible implementation manner of the second aspect, the third possible implementation manner of the second aspect, the fourth possible implementation manner of the second aspect or the fifth possible implementation manner of the second aspect, in a sixth possible implementation manner of the second aspect, the device further includes a scheduling unit, and the scheduling unit is specifically configured to:

schedule a center user according to spatial reuse mode SRM, where the center user refers to a user with a difference between the first strength and the second strength of the reference signal power being greater than the preset threshold.

In the present invention, information about a serving node and information about a coordinating node of an edge user are obtained, coordinated scheduling is performed on the edge user according to the information about the serving node and the information about the coordinating node, it is determined whether the serving node and the coordinating node can simultaneously schedule the edge user, and if yes, the serving node and the coordinating node are instructed to allocate a same code channel resource to send data to the edge user, so that the edge user is served in a coordinated transmission manner via beamforming based on code channel multiplexing, improving a received signal-to-noise ratio of the edge user.

## BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a system architecture diagram of a softcell according to the prior art;
FIG. 2 is a flowchart of a downlink scheduling method according to an embodiment of the present invention;
FIG. 3 is a system structural diagram of a downlink scheduling system according to an embodiment of the present invention;
FIG. 4 is a line graph of a cumulative distribution function CDF of delta1CQI and delta2CQI according to an embodiment of the present invention;
FIG. 5 is a schematic diagram of a downlink scheduling method according to an embodiment of the present invention;
FIG. 6 is a structural diagram of a downlink scheduling device according to an embodiment of the present invention; and
FIG. 7 is a structural diagram of another downlink scheduling device according to an embodiment of the present invention.

## DESCRIPTION OF EMBODIMENTS

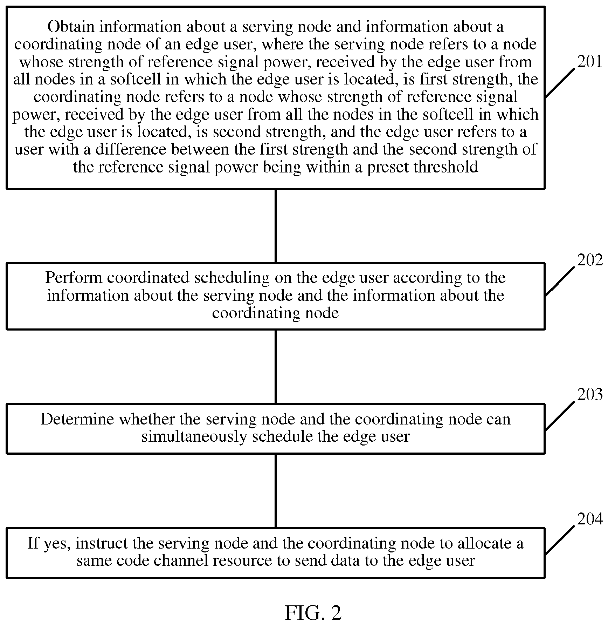

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.
Referring to FIG. 2, FIG. 2 is a flowchart of a downlink scheduling method according to an embodiment of the present invention. As shown in FIG. 2, the method includes the following steps:

Step 201: Obtain information about a serving node and information about a coordinating node of an edge user, where the serving node refers to a node whose strength of reference signal power, received by the edge user from all nodes in a softcell in which the edge user is located, is first strength, the coordinating node refers to a node whose strength of reference signal power, received by the edge user from all the nodes in the softcell in which the edge user is located, is second strength, and the edge user refers to a user with a difference between the first strength and the second strength of the reference signal power being within a preset threshold.

The serving node refers to the node whose strength of reference signal power, received by the edge user from all the nodes in the softcell in which the edge user is located, is the first strength, the coordinating node refers to the node whose strength of reference signal power, received by the edge user from all the nodes in the softcell in which the edge user is located, is the second strength, the information about the serving node includes but is not limited to an identity (Indentity, ID) of the serving node, and the information about the coordinating node includes but is not limited to an identity ID of the coordinating node.

A definition of a softcell edge user is as follows:

When a difference between a strength of a signal sent from a serving node of a user to the user and a strength of a signal sent from a transmission node, which causes maximum interference to the user, to the user is less than *n* dB, and when the transmission node that causes maximum interference to the user and the serving node of the user are in a same softcell, the user is referred to as a softcell edge user, and the transmission node that causes maximum interference to the user is marked as a coordinating node of the user.

A definition of a softcell center user is as follows:

If a user does not meet the definition of the softcell edge user, the user is a softcell center user.

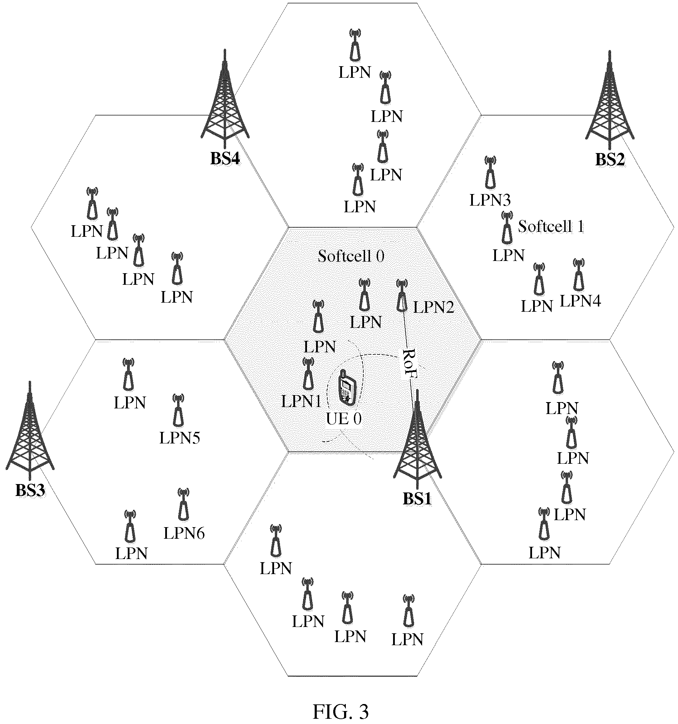

Specifically, referring to FIG. 3, FIG. 3 is a structural diagram of a downlink scheduling system according to an embodiment of the present invention. As shown in FIG. 3, a UMTS cellular system having 7 sites and 21 cells is used in this embodiment. FIG. 3 only shows a schematic diagram of seven cells, and other cells are generated in a wrap-around manner. Each hexagonal cell in the figure represents a softcell, four LPNs are placed in each softcell, and the LPNs use an edge-fixed distribution scenario shown in FIG. 3, where an ISD represents a distance between two closest BSs. There are sixteen users in each softcell, and the users use a hotspot distribution scenario, that is, 75% of the users are distributed within coverage of the LPNs. Two antennas are configured for each of an LPN, a user, and a base station (corresponding to a sector). A Softcell 0 is used as an example in this embodiment, to describe a coordinated transmission solution of joint beamforming in the present invention. First, each user determines a serving node of the user according to a long-time sounding signal broadcasted by a transmission node in the softcell, and determines whether the user belongs to an edge user or a center user. A specific determining criterion is: when a difference between strength of a signal received by a user from a serving node and strength of a signal received by the user from a transmission node having maximum interference is less than 6 dB, and the transmission node that causes maximum interference to the user and the user are in a same softcell, the user is an edge user, and the transmission node that causes maximum interference to the user is marked as a coordinating node of the user. If the user does not meet the foregoing determining criterion, the user is a center user.

Preferentially, the method further includes:

receiving channel quality indicator (Channel Quality Indicatior, CQI) information fed back by the edge user by using a differential feedback method, where
the differential feedback manner is: feeding back CQI_edge1, a difference between CQI_edge2 and CQI_edge1, and a difference between CQI_edge3 and CQI_edge1, or
presetting thresholds X and Y, if CQI_edge2 is higher than CQI_edge1 by X or more than X, feeding back X, and if CQI_edge3 is higher than CQI_edge1 by Y or more than Y, feeding back Y.

Specifically, for the softcell center user, after obtaining a channel H from the user to the serving node by means of channel estimation, the softcell center user first selects a codebook that can maximize a received signal power of the user from a precoding codebook set C = {$\mathbf{w}_1$, $\mathbf{w}_2$, $\mathbf{w}_3$, $\mathbf{w}_4$} listed in Table 1 as a precoding vector of the user, and marks the precoding vector as a precoding control indicator (Precoding Control Indicator, PCI):

$$\mathrm{PCI}_c = \arg\max_{\mathbf{w}\in\mathbf{C}}(\left\|\mathbf{H}\cdot(\mathbf{I}_L\otimes\mathbf{w}^H)\right\|^2)$$, and solves a CQI: $\mathrm{CQI}_c$ corresponding to an optimal PCI, where $\mathbf{I}_L$ is an identity matrix of $L \times L$, $L$ is a quantity of multipaths, $\otimes$ is a Kronecker product, $\|V\|^2$ is a second order norm of a matrix/vector $V$, and $\mathbf{w}^H$ is a conjugate transpose of $\mathbf{w}$. The center user uses 2 bits to feed back $\mathrm{PCI}_c$, and 5 bits to feed back $\mathrm{CQI}_c$

to a CCU.

**Table 1**

| $\mathbf{W}_1$ | $\mathbf{W}_2$ | $\mathbf{W}_3$ | $\mathbf{W}_4$ |
|---|---|---|---|
| $[\dfrac{1}{\sqrt{2}} \quad \dfrac{1+j}{2}]$ | $[\dfrac{1}{\sqrt{2}} \quad \dfrac{1-j}{2}]$ | $[\dfrac{1}{\sqrt{2}} \quad \dfrac{-1+j}{2}]$ | $[\dfrac{1}{\sqrt{2}} \quad \dfrac{-1-j}{2}]$ |

For the softcell edge user, three groups of {PCI, CQI} need to be fed back. The edge user first obtains channels $\mathbf{H}_1$ and $\mathbf{H}_2$ from the edge user to the serving node and the coordinating node by means of channel estimation; then separately obtains, according to a criterion of maximizing a received signal power, a PCI: $PCI_1 = \arg \max (\|\mathbf{H}_1 \cdot (\mathbf{I}_L \otimes \mathbf{w}^H)\|^2)$ independently $\mathbf{w} \in \mathbf{C}$ served by the serving node, a PCI: $PCI_2 = \arg \max_{\mathbf{w} \in \mathbf{C}} (\left\| \mathbf{H}_2 \cdot (\mathbf{I}_L \otimes \mathbf{w}^H) \right\|^2)$ independently served by the coordinating node, and PCIs: $\{PCI_3, PCI_4\} = \arg \max_{\mathbf{w} \in \mathbf{C}} (\left\| \mathbf{H}_1 \cdot (\mathbf{I}_L \otimes \mathbf{w}^H) \right\|^2 + \left\| \mathbf{H}_2 \cdot (\mathbf{I}_L \otimes \mathbf{w}^H) \right\|^2)$ when the serving node and the coordinating node perform coordinated transmission by means of beamforming; and separately solves, according to an optimal PCI, a CQI: $CQI_1$ independently served by the serving node, a CQI: $CQI_2$ independently served by the coordinating node, and a CQI: $CQI_3$ during coordinated transmission of the serving node and the coordinating node. $deltaCQI_1 = CQI_1 - CQI_2$, $deltaCQI_2 = CQI_3 - CQI_1$, and the edge user feeds back full information of $PCI_1$, $PCI_2$, $PCI_3$, $PCI_4$, and $CQI_1$, and feeds back $CQI_2$ and $CQI_3$ in the differential feedback manner.

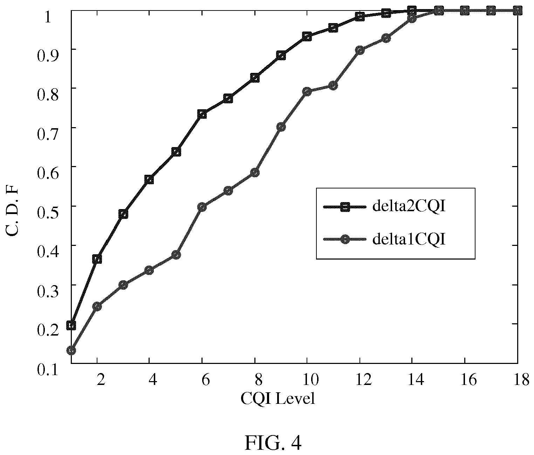

delta1CQI = $CQI_1$ - $CQI_2$ and delta2CQI = $CQI_3$ - $CQI_1$. Referring to FIG. 4, FIG. 4 is a line graph of a cumulative distribution function (Cumulative Distribution Function, CDF) of delta1CQI and delta2CQI according to an embodiment of the present invention. It can be seen from the line graph that, values of both delta1CQI and delta2CQI are basically less than 14, so that 3 bits are used to feed back delta1CQI and delta2CQI in this embodiment of the present invention. A specific differential feedback policy of an edge user is given below: the edge user uses 7 bits to feed back full information of {$PCI_1$, $CQI_1$}, uses 5 bits to feed back {$PCI_2$, delta1CQI}, and uses 7 bits to feed back {$PCI_3$, $PCI_4$, delta2CQI}. The edge user can obtain $CQI_2$ and $CQI_3$ according to $CQI_1$, delta1CQI, and delta2CQI. This differential feedback manner can reduce a feedback amount by 4 bits compared with a full-information feedback manner, and a subsequent emulation result shows that performance gains that are obtained by the differential feedback manner and the full-information feedback manner are equal.

Step 202: Perform coordinated scheduling on the edge user according to the information about the serving node and the information about the coordinating node.

Step 203: Determine whether the serving node and the coordinating node can simultaneously schedule the edge user.

Optionally, the determining whether the serving node and the coordinating node can simultaneously schedule the edge user includes:

simultaneously receiving, by the edge user in a current subframe, coordinated scheduling of the serving node and the coordinating node, and calculating, according to a signal to interference plus noise ratio CQI_edge3 of the coordinated scheduling, a proportional fairness (Proportional Fairness, PF) priority corresponding to the edge user served by the serving node and a PF priority corresponding to the edge user served by the coordinating node; and comparing the PF priority corresponding to the edge user served by the serving node and the PF priority corresponding to the edge user served by the coordinating node with PF priorities corresponding to another user separately served by the serving node and the coordinating node, where

if the PF priority corresponding to the edge user served by the serving node is higher than a PF priority corresponding to the another user served by the serving node, the serving node can schedule the edge user; and

if the PF priority corresponding to the edge user served by the coordinating node is higher than a PF priority corresponding to the another user served by the coordinating node, the coordinating node can schedule the edge user.

Step 204: If yes, instruct the serving node and the coordinating node to allocate a same code channel resource to send data to the edge user.

Optionally, the method further includes:

if the serving node and the coordinating node cannot simultaneously schedule the edge user, determining whether the serving node can schedule the edge user, where

if yes, the serving node independently schedules the edge user; and
the determining whether the serving node can schedule the edge user includes:

in a case in which the edge user receives independent scheduling of the serving node, calculating, according to a signal to interference plus noise ratio CQI_edge1 of the independent scheduling of the serving node, the PF priority corresponding to the edge user served by the serving node; and

comparing the PF priority corresponding to the edge user served by the serving node with a PF priority corresponding to another user served by the serving node, where

if the PF priority corresponding to the edge user served by the serving node is higher than the PF priority corresponding to the another user served by the serving node, the serving node can independently schedule the edge user.

Optionally, the method further includes:

if the serving node and the coordinating node cannot simultaneously schedule the edge user, and the serving node cannot schedule the edge user, determining whether the coordinating node can schedule the edge user, where

if yes, the coordinating node independently schedules the edge user; and
the determining whether the coordinating node can schedule the edge user includes:

in a case in which the edge user receives independent scheduling of the coordinating node, calculating, according to a signal to interference plus noise ratio CQI_edge2 of the independent scheduling of the coordinating node, the PF priority corresponding to the edge user served by the coordinating node; and

comparing the PF priority corresponding to the edge user served by the coordinating node with a PF priority corresponding to another user served by the coordinating node, where

if the PF priority corresponding to the edge user served by the coordinating node is higher than the PF priority corresponding to the another user served by the coordinating node, the coordinating node can independently schedule the edge user.

Optionally, the method further includes:

if the serving node and the coordinating node cannot simultaneously schedule the edge user, the serving node cannot independently schedule the edge user, and the coordinating node cannot independently schedule the edge user, skipping scheduling the edge user.

Optionally, the method further includes:

scheduling a center user according to spatial reuse mode (Spatial Reuse Mode, SRM), where the center user refers to a user with a difference between the first strength and the second strength of the reference signal power being greater than the preset threshold.

Specifically, a CCU first performs grouping according to sequence number information of the serving node and the coordinating node fed back by users. In this embodiment, there are five transmission nodes in a softcell, so that the users are divided into five groups, each transmission node is responsible for data transmission of the node used as a serving node, and the CCU independently performs PF scheduling on users of each group. A user group in which a BS is a serving node is used as an example below to describe a coordinated scheduling solution put forward in the present invention, and a process of scheduling a user served by another transmission node is the same. It is assumed that there are $p$ center users and $q$ edge users in the group, and a coordinating node set assisting in transmission of the edge users of the group is C. A CQI set fed back by the center users is $\{CQI_c\}$, a CQI set that is fed back by the edge user and that is independently served by the serving node is $\{CQI_1\}$, a CQI set that is fed back by the edge user and that is independently served by the coordinating node is $\{CQI_2\}$, and a CQI set fed back by the edge user when the serving node and the coordinating node perform coordinated transmission by means of beamforming is $\{CQI_3\}$.

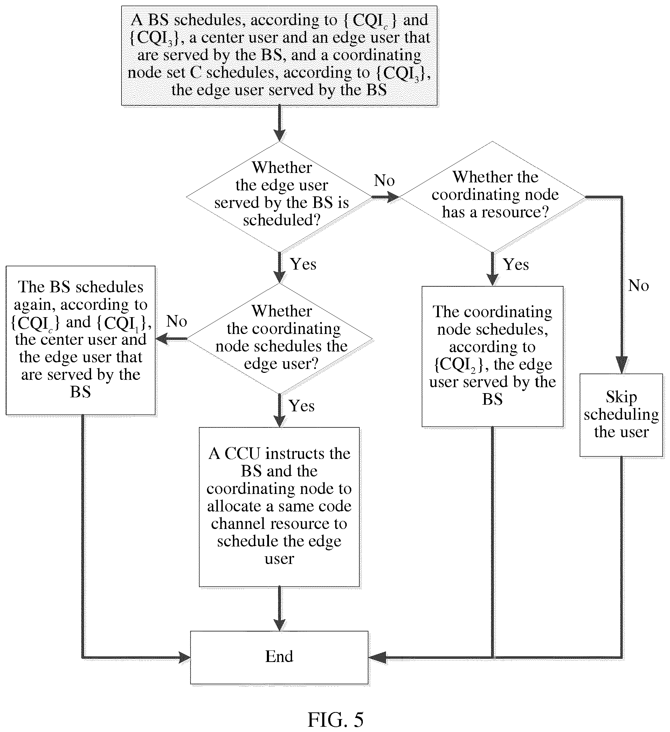

Referring to FIG. 5, FIG. 5 is a schematic diagram of a downlink scheduling method according to an embodiment of the present invention. As shown in FIG. 5, a BS schedules a center user and an edge user that belong to a BS group according to $\{CQI_c\}$ and $\{CQI_3\}$, and instructs a coordinating node set C to schedule the edge user that belongs to the BS group according to $\{CQI_3\}$. If the BS and a coordinating node simultaneously schedule a same edge user, a CCU instructs the BS and the coordinating node to allocate a same code channel resource to schedule the edge user. If the BS schedules an edge user, but the coordinating node does not schedule the same edge user, the BS schedules again the center user and the edge user that belong to the BS group according to $\{CQI_c\}$ and $\{CQI_1\}$, and if the BS schedules the edge user, the BS allocates a corresponding resource to schedule the edge user. If neither the BS nor the coordinating node schedules an edge user, the CCU queries whether the coordinating node has a remaining resource, and if there is a remaining resource, the coordinating node schedules the edge user according to $\{CQI_2\}$, and then the coordinating node allocates a corresponding resource to the edge user to perform data transmission. If neither the BS nor the coordinating node schedules an edge user, and the coordinating node does not have a remaining resource, no edge user is scheduled.

In the present invention, a coordinated scheduling solution of joint beamforming is put forward mainly for a problem of spectrum resource waste in SFN transmission mode and a problem of relatively poor performance of an edge user in SRM transmission mode that exist in a softcell.

The solution serves an edge user in a coordinated transmission manner via beamforming based on code channel multiplexing, improving a received signal-to-noise ratio of the edge user. During feedback, a center user needs to feed back a CQI independently served by a serving node, and the edge user needs to feed back the CQI independently served by the serving node, a CQI independently served by a coordinating node, and a CQI when the serving node and the coordinating node perform coordinated transmission by means of beamforming. During scheduling, the center user always does not perform coordinated transmission, only the edge user may perform coordinated transmission, and the center user performs scheduling according to a PF algorithm. For the edge user, the serving node performs scheduling according to the CQI of the coordinated transmission, and the coordinating node needs to use the edge user of the serving node as a user of the coordinating node, and likewise schedules the edge user served by the serving node according to the CQI of the coordinated transmission. Only when the serving node and the coordinating node simultaneously schedule a same edge user, the CCU instructs the serving node and the coordinating node to perform coordinated transmission by means of beamforming. If the serving node schedules the edge user, the coordinating node does not schedule the edge user, the serving node performs second-level scheduling on the edge user according to the CQI independently served by the serving node, and if the serving node schedules the edge user, the CCU allocates a resource to the serving node to perform data transmission. If neither the serving node nor the coordinating node schedules the edge user, but the coordinating node has a remaining code channel resource, the coordinating node schedules the edge user according to the CQI independently served by the coordinating node.

A cell throughput rate, a cell throughput rate of 50% users, and a cell throughput rate of worst 5% users of an SRM scheduling solution, a coordinated scheduling solution in a full-information feedback manner in the present invention, and a coordinated scheduling solution in a differential feedback manner in the present invention are given below. The SRM scheduling solution uses a method for independently performing PF scheduling between the transmission nodes.

**Table 2**

| | Throughput rate of worst 5% users | Throughput rate of 50% users | Average throughput rate of users |
|---|---|---|---|
| SRM solution | 100% | 100% | 100% |
| Full-information feedback coordinated scheduling solution | 145.3% | 119.04% | 107.82% |
| Differential feedback coordinated scheduling solution | 139.23% | 112.37% | 103.43% |

It can be seen from Table 2 that, the coordinated scheduling solution of joint beamforming put forward in the present invention has better performance than that of the existing SRM solution in terms of an average throughput, a throughput rate of 50% users, and a throughput rate of worst 5% users, and particularly greatly improves performance of an edge user. Compared with the full-information feedback coordinated scheduling solution, the differential feedback coordinated scheduling solution has a performance loss, but the performance loss is not so large, and particularly in terms of performance of an edge user, the differential feedback coordinated scheduling solution still has a performance gain of 39.23% compared with the SRM solution.

In the present invention, information about a serving node and information about a coordinating node of an edge user are obtained, coordinated scheduling is performed on the edge user according to the information about the serving node and the information about the coordinating node, it is determined whether the serving node and the coordinating node can simultaneously schedule the edge user, and if yes, the serving node and the coordinating node are instructed to allocate a same code channel resource to send data to the edge user, so that the edge user is served in a coordinated transmission manner via beamforming based on code channel multiplexing, improving a received signal-to-noise ratio of the edge user.

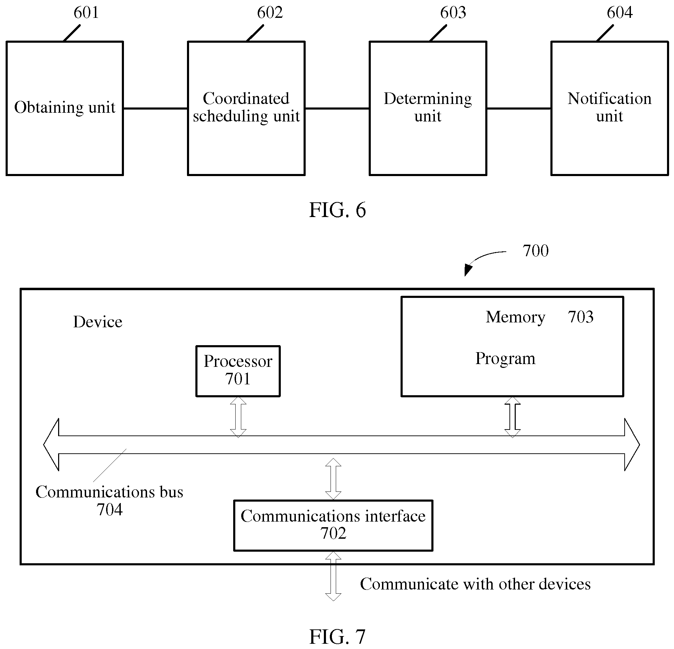

Referring to FIG. 6, FIG. 6 is a structural diagram of a downlink scheduling device according to an embodiment of the present invention. As shown in FIG. 6, the device includes:

An obtaining unit 601, configured to obtain information about a serving node and information about a coordinating node of an edge user, where the serving node refers to a node whose strength of reference signal power, received by the edge user from all nodes in a softcell in which the edge user is located, is first strength, the coordinating node refers to a node whose strength of reference signal power, received by the edge user from all the nodes in the softcell in which the edge user is located, is second strength, and the edge user refers to a user with a difference between the first strength and the second strength of the reference signal power being within a preset threshold.

A definition of a softcell edge user is as follows:

When a difference between a strength of a signal sent from a serving node of a user to the user and a strength of a signal sent from a transmission node, which causes maximum interference to the user, to the user is less than $n$ dB, and when the transmission node that causes maximum interference to the user and the serving node of the user are in a same softcell, the user is referred to as a softcell edge user, and the transmission node that causes maximum interference to the user is marked as a coordinating node of the user.

A definition of a softcell center user is as follows:

If a user does not meet the definition of the softcell edge user, the user is a softcell center user.

Preferentially, the device further includes a receiving unit, and the receiving unit is specifically configured to:

receive CQI information fed back by the edge user by using a differential feedback method, where
the differential feedback manner is: feeding back CQI_edge1, a difference between CQI_edge2 and CQI_edge1, and a difference between CQI_edge3 and CQI_edge1, or
presetting thresholds X and Y, if CQI_edge2 is higher than CQI_edge1 by X or more than X, feeding back X, and if CQI_edge3 is higher than CQI_edge1 by Y or more than Y, feeding back Y.

A coordinated scheduling unit 602, configured to perform coordinated scheduling on the edge user according to the information about the serving node and the information about the coordinating node.

A determining unit 603, configured to determine whether the serving node and the coordinating node can simultaneously schedule the edge user.

Optionally, the determining unit 603 is specifically configured to:

simultaneously receive, by the edge user in a current subframe, coordinated scheduling of the serving node and the coordinating node, and calculate, according to a signal to interference plus noise ratio CQI_edge3 of the coordinated scheduling, a proportional fairness PF priority corresponding to the edge user served by the serving node and a PF priority corresponding to the edge user served by the coordinating node; and
compare the PF priority corresponding to the edge user served by the serving node and the PF priority corresponding to the edge user served by the coordinating node with PF priorities corresponding to another user separately served by the serving node and the coordinating node, where
if the PF priority corresponding to the edge user served by the serving node is higher than a PF priority corresponding to the another user served by the serving node, the serving node can schedule the edge user; and
if the PF priority corresponding to the edge user served by the coordinating node is higher than a PF priority corresponding to the another user served by the coordinating node, the coordinating node can schedule the edge user.

A notification unit 604, configured to: if yes, instruct the serving node and the coordinating node to allocate a same code channel resource to send data to the edge user.

Optionally, the determining unit 603 is further configured to:

if the serving node and the coordinating node cannot simultaneously schedule the edge user, determine whether the serving node can schedule the edge user, where
if yes, the serving node independently schedules the edge user; and
the determining whether the serving node can schedule the edge user includes:

in a case in which the edge user receives independent scheduling of the serving node, calculating, according to a signal to interference plus noise ratio CQI_edge1 of the independent scheduling of the serving node, the PF priority corresponding to the edge user served by the serving node; and

comparing the PF priority corresponding to the edge user served by the serving node with a PF priority corresponding to another user served by the serving node, where

if the PF priority corresponding to the edge user served by the serving node is higher than the PF priority corresponding to the another user served by the serving node, the serving node can independently schedule the edge user.

Optionally, the determining unit 603 is further configured to:

if the serving node and the coordinating node cannot simultaneously schedule the edge user, and the serving node cannot schedule the edge user, determine whether the coordinating node can schedule the edge user, where if yes, the coordinating node independently schedules the edge user; and
the determining whether the coordinating node can schedule the edge user includes:

in a case in which the edge user receives independent scheduling of the coordinating node, calculating, according to a signal to interference plus noise ratio CQI_edge2 of the independent scheduling of the coordinating node, the PF priority corresponding to the edge user served by the coordinating node; and

comparing the PF priority corresponding to the edge user served by the coordinating node with a PF priority corresponding to another user served by the coordinating node, where

if the PF priority corresponding to the edge user served by the coordinating node is higher than the PF priority corresponding to the another user served by the coordinating node, the coordinating node can independently schedule the edge user.

Optionally, the device further includes: a processing unit, and the processing unit is specifically configured to:

if the serving node and the coordinating node cannot simultaneously schedule the edge user, the serving node cannot independently schedule the edge user, and the coordinating node cannot independently schedule the edge user, skip scheduling the edge user.

Optionally, the device further includes: a scheduling unit, and the scheduling unit is specifically configured to:

schedule a center user according to spatial reuse mode SRM, where the center user refers to a user with a difference between the first strength and the second strength of the reference signal power being greater than the preset threshold.

Specifically, a CCU first performs grouping according to sequence number information of the serving node and the coordinating node fed back by users. In this embodiment, there are five transmission nodes in a softcell, so that the users are divided into five groups, each transmission node is responsible for data transmission of the node used as a serving node, and the CCU independently performs PF scheduling on users of each group. A user group in which a BS is a serving node is used as an example below to describe a coordinated scheduling solution put forward in the present invention, and a process of scheduling a user served by another transmission node is the same. It is assumed that there are $p$ center users and $q$ edge users in the group, and a coordinating node set assisting in transmission of the edge users of the group is C. A CQI set fed back by the center users is $\{COI_c\}$, a CQI set that is fed back by the edge user and that is independently served by the serving node is $\{CQI_1\}$, a CQI set that is fed back by the edge user and that is independently served by the coordinating node is $\{COI_2\}$, and a CQI set fed back by the edge user when the serving node and the coordinating node perform coordinated transmission by means of beamforming is $\{CQI_3\}$.

In the present invention, information about a serving node and information about a coordinating node of an edge user are obtained, coordinated scheduling is performed on the edge user according to the information about the serving node and the information about the coordinating node, it is determined whether the serving node and the coordinating node can simultaneously schedule the edge user, and if yes, the serving node and the coordinating node are instructed to allocate a same code channel resource to send data to the edge user, so that the edge user is served in a coordinated transmission manner via beamforming based on code channel multiplexing, improving a received signal-to-noise ratio of the edge user.

FIG. 7 is a structural diagram of another downlink scheduling device according to an embodiment of the present invention. Referring to FIG. 7, FIG. 7 shows a device 700 provided in this embodiment of the present invention, and a specific embodiment of the present invention does not limit specific implementation of the device. The device 700 includes:

a processor (processor) 701, a communications interface (Communications Interface) 702, a memory (memory) 703, and a bus 704.

The processor 701, the communications interface 702, and the memory 703 communicate with each other by using the bus 704.
The communications interface 702 is configured to communicate with a routing processing server.
The processor 701 is configured to execute a program.
Specifically, the program may include program code, and the program code includes a computer operation instruction.
The processor 701 may be a central processing unit (central processing unit, CPU) or an application-specific integrated circuit ASIC (Application Specific Integrated Circuit), or is configured as one or more integrated circuits that implement the embodiment of the present invention.
The memory 703 is configured to store the program. The memory 703 may be a volatile memory (volatile memory), such as a random access memory (random-access memory, RAM), or a non-volatile memory (non-volatile memory), such as a read-only memory (read-only memory, ROM), a flash memory (flash memory), a hard disk drive (hard disk drive, HDD), or a solid state drive (solid-state drive, SSD). The processor 701 performs the following method according to a program instruction stored in the memory 703:

obtaining information about a serving node and information about a coordinating node of an edge user, where the serving node refers to a node whose strength of reference signal power, received by the edge user from all nodes in a softcell in which the edge user is located, is first strength, the coordinating node refers to a node whose strength of reference signal power, received by the edge user from all the nodes in the softcell in which the edge user is located, is second strength, and the edge user refers to a user with a difference between the first strength and the second strength of the reference signal power being within a preset threshold;
performing coordinated scheduling on the edge user according to the information about the serving node and the information about the coordinating node;
determining whether the serving node and the coordinating node can simultaneously schedule the edge user; and
if yes, instructing the serving node and the coordinating node to allocate a same code channel resource to send data to the edge user.

The determining whether the serving node and the coordinating node can simultaneously schedule the edge user includes:

simultaneously receiving, by the edge user in a current subframe, coordinated scheduling of the serving node and the coordinating node, and calculating, according to a signal to interference plus noise ratio CQI_edge3 of the coordinated scheduling, a proportional fairness PF priority corresponding to the edge user served by the serving node and a PF priority corresponding to the edge user served by the coordinating node; and
comparing the PF priority corresponding to the edge user served by the serving node and the PF priority corresponding to the edge user served by the coordinating node with PF priorities corresponding to another user separately served by the serving node and the coordinating node, where
if the PF priority corresponding to the edge user served by the serving node is higher than a PF priority corresponding to the another user served by the serving node, the serving node can schedule the edge user; and
if the PF priority corresponding to the edge user served by the coordinating node is higher than a PF priority corresponding to the another user served by the coordinating node, the coordinating node can schedule the edge user.

The method further includes:

if the serving node and the coordinating node cannot simultaneously schedule the edge user, determining whether the serving node can schedule the edge user, where
if yes, the serving node independently schedules the edge user; and
the determining whether the serving node can schedule the edge user includes:

in a case in which the edge user receives independent scheduling of the serving node, calculating, according to a signal to interference plus noise ratio CQI_edge1 of the independent scheduling of the serving node, the PF priority corresponding to the edge user served by the serving node; and
comparing the PF priority corresponding to the edge user served by the serving node with a PF priority corresponding to another user served by the serving node, where

if the PF priority corresponding to the edge user served by the serving node is higher than the PF priority corresponding to the another user served by the serving node, the serving node can independently schedule the edge user.

The method further includes:

if the serving node and the coordinating node cannot simultaneously schedule the edge user, and the serving node cannot schedule the edge user, determining whether the coordinating node can schedule the edge user, where if yes, the coordinating node independently schedules the edge user; and
the determining whether the coordinating node can schedule the edge user includes:

in a case in which the edge user receives independent scheduling of the coordinating node, calculating, according to a signal to interference plus noise ratio CQI_edge2 of the independent scheduling of the coordinating node, the PF priority corresponding to the edge user served by the coordinating node; and
comparing the PF priority corresponding to the edge user served by the coordinating node with a PF priority corresponding to another user served by the coordinating node, where
if the PF priority corresponding to the edge user served by the coordinating node is higher than the PF priority corresponding to the another user served by the coordinating node, the coordinating node can independently schedule the edge user.

The method further includes:

receiving CQI information fed back by the edge user by using a differential feedback method, where
the differential feedback manner is: feeding back CQI_edge1, a difference between CQI_edge2 and CQI_edge1, and a difference between CQI_edge3 and CQI_edge1, or
presetting thresholds X and Y, if CQI_edge2 is higher than CQI_edge1 by X or more than X, feeding back X, and if CQI_edge3 is higher than CQI_edge1 by Y or more than Y, feeding back Y.

The method further includes:

if the serving node and the coordinating node cannot simultaneously schedule the edge user, the serving node cannot independently schedule the edge user, and the coordinating node cannot independently schedule the edge user, skipping scheduling the edge user.

The method further includes:

scheduling a center user according to spatial reuse mode SRM, where the center user refers to a user with a difference between the first strength and the second strength of the reference signal power being greater than the preset threshold.

The present invention provides a downlink scheduling method and device, where in the method, information about a serving node and information about a coordinating node of an edge user are obtained, coordinated scheduling is performed on the edge user according to the information about the serving node and the information about the coordinating node, it is determined whether the serving node and the coordinating node can simultaneously schedule the edge user, and if yes, the serving node and the coordinating node are instructed to allocate a same code channel resource to send data to the edge user, so that the edge user is served in a coordinated transmission manner via beamforming based on code channel multiplexing, improving a received signal-to-noise ratio of the edge user.

The foregoing descriptions are merely exemplary implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1.  A downlink scheduling method, wherein the method comprises:

obtaining information about a serving node and information about a coordinating node of an edge user, wherein the serving node refers to a node whose strength of reference signal power, received by the edge user from all nodes in a softcell in which the edge user is located, is first strength, the coordinating node refers to a node whose strength of reference signal power, received by the edge user from all the nodes in the softcell in which the edge user is located, is second strength, and the edge user refers to a user with a difference between the first strength and the second strength of the reference signal power being within a preset threshold; scheduling the edge user according to the information about the serving node and the information about the coordinating node; determining whether the serving node and the coordinating node can simultaneously schedule the edge user; and if yes, instructing the serving node and the coordinating node to allocate a same code channel resource to send data to the edge user.

2. The method according to claim 1, wherein the determining whether the serving node and the coordinating node can simultaneously schedule the edge user comprises:

simultaneously receiving, by the edge user in a current subframe, coordinated scheduling of the serving node and the coordinating node, and calculating, according to a signal to interference plus noise ratio CQI_edge3 of the coordinated scheduling, a proportional fairness PF priority corresponding to the edge user served by the serving node and a PF priority corresponding to the edge user served by the coordinating node; and comparing the PF priority corresponding to the edge user served by the serving node and the PF priority corresponding to the edge user served by the coordinating node with PF priorities corresponding to another user separately served by the serving node and the coordinating node, wherein if the PF priority corresponding to the edge user served by the serving node is higher than a PF priority corresponding to the another user served by the serving node, the serving node can schedule the edge user; and if the PF priority corresponding to the edge user served by the coordinating node is higher than a PF priority corresponding to the another user served by the coordinating node, the coordinating node can schedule the edge user.

3. The method according to claim 1 or 2, wherein the method further comprises:

if the serving node and the coordinating node cannot simultaneously schedule the edge user, determining whether the serving node can schedule the edge user, wherein if yes, the serving node independently schedules the edge user; and the determining whether the serving node can schedule the edge user comprises:

in a case in which the edge user receives independent scheduling of the serving node, calculating, according to a signal to interference plus noise ratio CQI_edge1 of the independent scheduling of the serving node, a PF priority corresponding to the edge user served by the serving node; and comparing the PF priority corresponding to the edge user served by the serving node with a PF priority corresponding to another user served by the serving node, where if the PF priority corresponding to the edge user served by the serving node is higher than the PF priority corresponding to the another user served by the serving node, the serving node can independently schedule the edge user.

4. The method according to claim 3, wherein the method further comprises:

if the serving node and the coordinating node cannot simultaneously schedule the edge user, and the serving node cannot schedule the edge user, determining whether the coordinating node can schedule the edge user, wherein if yes, the coordinating node independently schedules the edge user; and the determining whether the coordinating node can schedule the edge user comprises:

in a case in which the edge user receives independent scheduling of the coordinating node, calculating, according to a signal to interference plus noise ratio CQI_edge2 of the independent scheduling of the coordinating node, a PF priority corresponding to the edge user served by the coordinating node; and comparing the PF priority corresponding to the edge user served by the coordinating node with a PF priority corresponding to another user served by the coordinating node, where if the PF priority corresponding to the edge user served by the coordinating node is higher than the PF priority corresponding to the another user served by the coordinating node, the coordinating node can independently schedule the edge user.

5.  The method according to claim 4, wherein the method further comprises:

    receiving CQI information fed back by the edge user by using a differential feedback method, wherein
    the differential feedback manner is: feeding back CQI_edge1, a difference between CQI_edge2 and CQI_edge1, and a difference between CQI_edge3 and CQI_edge1, or
    presetting thresholds X and Y, if CQI_edge2 is higher than CQI_edge1 by X or more than X, feeding back X, and if CQI_edge3 is higher than CQI_edge1 by Y or more than Y, feeding back Y.

6.  The method according to any one of claims 1 to 5, wherein the method further comprises:

    if the serving node and the coordinating node cannot simultaneously schedule the edge user, the serving node cannot independently schedule the edge user, and the coordinating node cannot independently schedule the edge user, skipping scheduling the edge user.

7.  The method according to any one of claims 1 to 6, wherein the method further comprises:

    scheduling a center user according to spatial reuse mode SRM, wherein the center user refers to a user with a difference between the first strength and the second strength of the reference signal power being greater than the preset threshold.

8.  A downlink scheduling device, wherein the device comprises:

    an obtaining unit, configured to obtain information about a serving node and information about a coordinating node of an edge user, wherein the serving node refers to a node whose strength of reference signal power, received by the edge user from all nodes in a softcell in which the edge user is located, is first strength, the coordinating node refers to a node whose strength of reference signal power, received by the edge user from all the nodes in the softcell in which the edge user is located, is second strength, and the edge user refers to a user with a difference between the first strength and the second strength of the reference signal power being within a preset threshold;
    a coordinated scheduling unit, configured to perform coordinated scheduling on the edge user according to the information about the serving node and the information about the coordinating node;
    a determining unit, configured to determine whether the serving node and the coordinating node can simultaneously schedule the edge user; and
    a notification unit, configured to: if yes, instruct the serving node and the coordinating node to allocate a same code channel resource to send data to the edge user.

9.  The device according to claim 8, wherein the determining unit is specifically configured to:

    simultaneously receive, by the edge user in a current subframe, coordinated scheduling of the serving node and the coordinating node, and calculate, according to a signal to interference plus noise ratio CQI_edge3 of the coordinated scheduling, a proportional fairness PF priority corresponding to the edge user served by the serving node and a PF priority corresponding to the edge user served by the coordinating node; and
    compare the PF priority corresponding to the edge user served by the serving node and the PF priority corresponding to the edge user served by the coordinating node with PF priorities corresponding to another user separately served by the serving node and the coordinating node, wherein
    if the PF priority corresponding to the edge user served by the serving node is higher than a PF priority corresponding to the another user served by the serving node, the serving node can schedule the edge user; and
    if the PF priority corresponding to the edge user served by the coordinating node is higher than a PF priority corresponding to the another user served by the coordinating node, the coordinating node can schedule the edge user.

10. The device according to claim 8 or 9, wherein the determining unit is further configured to:

    if the serving node and the coordinating node cannot simultaneously schedule the edge user, determine whether the serving node can schedule the edge user, wherein
if yes, the serving node independently schedules the edge user; and
the determining whether the serving node can schedule the edge user comprises:

in a case in which the edge user receives independent scheduling of the serving node, calculating, according to a signal to interference plus noise ratio CQI_edge1 of the independent scheduling of the serving node, a PF priority corresponding to the edge user served by the serving node; and
comparing the PF priority corresponding to the edge user served by the serving node with a PF priority corresponding to another user served by the serving node, wherein
if the PF priority corresponding to the edge user served by the serving node is higher than the PF priority corresponding to the another user served by the serving node, the serving node can independently schedule the edge user.

11. The device according to claim 10, wherein the determining unit is further configured to:

if the serving node and the coordinating node cannot simultaneously schedule the edge user, and the serving node cannot schedule the edge user, determine whether the coordinating node can schedule the edge user, wherein
if yes, the coordinating node independently schedules the edge user; and
the determining whether the coordinating node can schedule the edge user comprises:

in a case in which the edge user receives independent scheduling of the coordinating node, calculating, according to a signal to interference plus noise ratio CQI_edge2 of the independent scheduling of the coordinating node, a PF priority corresponding to the edge user served by the coordinating node; and
comparing the PF priority corresponding to the edge user served by the coordinating node with a PF priority corresponding to another user served by the coordinating node, wherein
if the PF priority corresponding to the edge user served by the coordinating node is higher than the PF priority corresponding to the another user served by the coordinating node, the coordinating node can independently schedule the edge user.

12. The device according to claim 11, wherein the device further comprises a receiving unit, and the receiving unit is specifically configured to:

receive CQI information fed back by the edge user by using a differential feedback method, wherein
the differential feedback manner is: feeding back CQI_edge1, a difference between CQI_edge2 and CQI_edge1, and a difference between CQI_edge3 and CQI_edge1, or
presetting thresholds X and Y, if CQI_edge2 is higher than CQI_edge1 by X or more than X, feeding back X, and if CQI_edge3 is higher than CQI_edge1 by Y or more than Y, feeding back Y.

13. The device according to any one of claims 8 to 12, wherein the device further comprises a processing unit, and the processing unit is specifically configured to:

if the serving node and the coordinating node cannot simultaneously schedule the edge user, the serving node cannot independently schedule the edge user, and the coordinating node cannot independently schedule the edge user, skip scheduling the edge user.

14. The device according to any one of claims 8 to 13, wherein the device further comprises a scheduling unit, and the scheduling unit is specifically configured to:

schedule a center user according to spatial reuse mode SRM, wherein the center user refers to a user with a difference between the first strength and the second strength of the reference signal power being greater than the preset threshold.

FIG. 1

Obtain information about a serving node and information about a coordinating node of an edge user, where the serving node refers to a node whose strength of reference signal power, received by the edge user from all nodes in a softcell in which the edge user is located, is first strength, the coordinating node refers to a node whose strength of reference signal power, received by the edge user from all the nodes in the softcell in which the edge user is located, is second strength, and the edge user refers to a user with a difference between the first strength and the second strength of the reference signal power being within a preset threshold

201

Perform coordinated scheduling on the edge user according to the information about the serving node and the information about the coordinating node

202

Determine whether the serving node and the coordinating node can simultaneously schedule the edge user

203

If yes, instruct the serving node and the coordinating node to allocate a same code channel resource to send data to the edge user

204

FIG. 2

FIG. 3

FIG. 4

A BS schedules, according to { CQI$_c$ } and {CQI$_3$}, a center user and an edge user that are served by the BS, and a coordinating node set C schedules, according to {CQI$_3$}, the edge user served by the BS

Whether the edge user served by the BS is scheduled?

No

Whether the coordinating node has a resource?

Yes

Yes

No

The BS schedules again, according to {CQI$_c$} and {CQI$_1$}, the center user and the edge user that are served by the BS

No

Whether the coordinating node schedules the edge user?

The coordinating node schedules, according to {CQI$_2$}, the edge user served by the BS

Skip scheduling the user

Yes

A CCU instructs the BS and the coordinating node to allocate a same code channel resource to schedule the edge user

End

FIG. 5

601                    602                    603                    604

| Obtaining unit | Coordinated scheduling unit | Determining unit | Notification unit |

FIG. 6

700

Device

Memory     703

Program

Processor
701

Communications bus
704

Communications interface
702

Communicate with other devices

FIG. 7

# INTERNATIONAL SEARCH REPORT

| International application No. |
|---|
| PCT/CN2014/075133 |

**A. CLASSIFICATION OF SUBJECT MATTER**

H04B 7/06 (2006.01) i; H04W 72/12 (2009.01) i

According to International Patent Classification (IPC) or to both national classification and IPC

**B. FIELDS SEARCHED**

Minimum documentation searched (classification system followed by classification symbols)

H04B; H04W; H04Q; H04L

Documentation searched other than minimum documentation to the extent that such documents are included in the fields searched

Electronic data base consulted during the international search (name of data base and, where practicable, search terms used)

CNPAT, WPI, EPODOC, CNKI, GOOGLE: attemper, soft cell, service node, cooperating nodes, threshold, cell-edge users, CQI, schedule+, SNR, carrier-to-interference ratio, signal to interference ratio, soft_cell, serv+, cooperat+, power, strength, edge, simultane+, synchronous+, SRM

**C. DOCUMENTS CONSIDERED TO BE RELEVANT**

| Category* | Citation of document, with indication, where appropriate, of the relevant passages | Relevant to claim No. |
|---|---|---|
| A | CN 103001678 A (HUAWEI TECHNOLOGIES CO., LTD.) 27 March 2013 (27.03.2013) description, paragraphs [0044] to [0050], and [0159] | 1-14 |
| A | CN 101019452 A (JUSHRI TECHNOLOGIES INCORPORATION) 15 August 2007 (15.08.2007) the whole document | 1-14 |
| A | CN 101686080 A (ZTE CORPORATION) 31 March 2010 (31.03.2010) the whole document2 | 1-14 |
| A | CN 102130748 A (HUAWEI TECHNOLOGIES CO., LTD.) 20 July 2011 (20.07.2011) the whole document | 1-14 |
| A | CN 102611487 A (ZTE CORPORATION) 25 July 2012 (25.07.2012) the whole document | 1-14 |
| A | WO 2013139350 A1 (TELEFONAKTIEBOLAGET L M ERICSSON) 26 September 2013 (26.09.2013) the whole document | 1-14 |

☐ Further documents are listed in the continuation of Box C.     ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 December 2014 | 08 January 2015 |

| Name and mailing address of the ISA | Authorized officer |
|---|---|
| State Intellectual Property Office of the P. R. China No. 6, Xitucheng Road, Jimenqiao Haidian District, Beijing 100088, China | LUO, Xiao |
| Facsimile No. (86-10) 62019451 | Telephone No. (86-10) 82245577 |

Form PCT/ISA /210 (second sheet) (July 2009)

**INTERNATIONAL SEARCH REPORT**
Information on patent family members

| International application No. |
| --- |
| PCT/CN2014/075133 |

| Patent Documents referred in the Report | Publication Date | Patent Family | Publication Date |
| --- | --- | --- | --- |
| CN 103001678 A | 27 March 2013 | WO 2013034115 A1 | 14 March 2013 |
| | | US 2014192744 A1 | 10 July 2014 |
| | | EP 2755336 A1 | 16 July 2014 |
| CN 101019452 A | 15 August 2007 | WO 2006005220 A1 | 19 January 2006 |
| CN 101686080 A | 31 March 2007 | WO 2010034189 A1 | 01 April 2010 |
| CN 102130748 A | 20 July 2011 | None | |
| CN 102611487 A | 25 July 2012 | WO 2012100587 A1 | 02 August 2012 |
| WO 2013139350 A1 | 26 September 2013 | AU 2012374304 A1 | 09 October 2014 |
| | | CN 10425914 A | 10 December 2014 |

Form PCT/ISA/210 (patent family annex) (July 2009)